# FASCICULE DE BREVET EUROPEEN

(11) **EP 2 439 091 B1**
(45) Date de publication et mention de la délivrance du brevet: **31.10.2012**
(21) Numéro de dépôt: 11180382.1
(22) Date de dépôt: 07.09.2011
(51) Int. Cl.: B60J 7/11

(54) **Véhicule automobile dont le toit est equipe de deux panneaux amovibles**
Fahrzeug, dessen Dach mit zwei abnehmbaren Platten ausgestattet ist
Automobile with the roof thereof provided with two removable panels

(30) Priorité: 05.10.2010 FR 1058040
(43) Date de publication de la demande: 11.04.2012
(73) Titulaire: Peugeot Citroën Automobiles SA, 78140 Vélizy-Villacoublay (FR)
(72) Inventeur: Rousseau, Xavier, 91220 BRETIGNY SUR ORGE (FR)
(74) Mandataire: Fosse, Danièle

(56) Documents cités:
- DE-C- 802 907
- US-A- 4 821 394
- US-B1- 6 283 531

## Description

La présente invention concerne un véhicule automobile selon le préambule de la revendication 1, comprenant un toit escamotable fixé de façon amovible dans une ouverture s'étendant entre les deux parties supérieures fixes des côtés d'habitacle et entre une partie avant fixe adjacente au pare-brise et une partie arrière fixe adjacente à la lunette arrière.

Ce toit escamotable est constitué par un panneau avant et par un panneau arrière, chacun des panneaux comportant de chaque côté un organe de fixation amovible coopérant avec un organe de fixation complémentaire fixé sur la partie supérieure d'un côté d'habitacle. Un véhicule de ce type est connu document DE 802907C.

Ces deux panneaux peuvent être enlevés du véhicule et être rangés éventuellement dans le coffre arrière.

Lorsque les deux panneaux sont enlevés, l'habitacle du véhicule est entièrement découvert.

L'ouverture située au-dessus de l'habitacle est bordée de chaque côté par la partie supérieure en forme d'arc des deux côtés d'habitacle.

Compte-tenu de la faible largeur de chacune des deux parties supérieures des côtés d'habitacle, les organes de verrouillage fixés sur celles-ci doivent présenter une largeur réduite pour ne pas faire saillie dans l'ouverture supérieure de l'habitacle.

De plus, ces organes de verrouillage doivent pouvoir être commandés d'une manière simple depuis l'intérieur du véhicule.

Le but de la présente invention est de créer un véhicule automobile dont le toit est formé de deux panneaux amovibles et est équipé d'organes pour verrouiller et déverrouiller ces deux panneaux qui permettent de résoudre le problème évoqué ci-dessus.

Ce but est atteint, selon l'invention, grâce à un véhicule automobile comprenant un toit escamotable fixé de façon amovible dans une ouverture s'étendant entre les deux parties supérieures fixes des côtés d'habitacle et entre une partie avant fixe adjacente au pare-brise et une partie arrière fixe adjacente à la lunette arrière, ce toit escamotable étant constitué par un panneau avant et par un panneau arrière, chacun des panneaux comportant de chaque côté un organe de fixation amovible coopérant avec un organe de fixation complémentaire fixé sur la partie supérieure d'un côté d'habitacle, caractérisé en ce que lesdits organes de fixation amovibles et lesdits organes de fixation complémentaires comprennent chacun des moyens de guidage en translation suivant l'axe vertical du véhicule et des moyens de verrouillage suivant l'axe longitudinal du véhicule

Ces moyens de guidage suivant l'axe vertical du véhicule et ces moyens de verrouillage suivant l'axe longitudinal du véhicule peuvent présenter un encombrement très réduit, ce qui facilite leur fixation sur la faible largeur de chacune des deux parties supérieures des côtés d'habitacle.

Dans une version préférée de l'invention, lesdits moyens de verrouillage comportent deux paires de mâchoires solidaires de la partie supérieure du côté d'habitacle, mobiles l'une vers l'autre, grâce à une poignée unique, entre une première position dans laquelle chacune des paires de mâchoires est verrouillée à l'organe de fixation porté par l'un des deux panneaux et une seconde position dans laquelle ces paires de mâchoires sont déverrouillées par rapport aux organes de fixation, ladite poignée étant située à l'intérieur de l'habitacle.

Ainsi, la poignée est facilement accessible à l'intérieur de l'habitacle pour déverrouiller les deux paires de mâchoires situées de chaque côté afin de pouvoir libérer les deux panneaux.

De préférence, les deux paires de mâchoires sont situées dans un même plan sensiblement vertical et sont mobiles entre lesdites première et seconde positions par pivotement autour d'un axe perpendiculaire audit plan sensiblement vertical, cet axe étant porté par un support fixe.

Ces dispositions permettent d'obtenir un ensemble présentant un encombrement en largeur particulièrement faible, facile à fixer sur chacune des parties supérieures du côté d'habitacle.

Dans un mode de réalisation avantageux de l'invention, la poignée est montée pivotante suivant un axe perpendiculaire aux axes de pivotement des paires de mâchoires, des organes de transmission étant prévus entre la poignée et les deux paires de mâchoires pour que le pivotement de la poignée puisse commander le déplacement des deux paires de mâchoires entre lesdites première et seconde positions.

Dans un mode de réalisation préféré de l'invention, l'organe de fixation porté par chacun des deux panneaux est constitué par un élément de révolution faisant saillie axialement sur la face interne du panneau et comportant une gorge annulaire dans laquelle peut se verrouiller une paire de mâchoires dans ladite première position.

Cet élément de révolution peut présenter la forme d'un diabolo.

De préférence, ledit élément de révolution est situé respectivement près du bord arrière du panneau avant et près du bord avant du panneau arrière.

Ainsi, l'ensemble de verrouillage situé sur chacune des deux parties supérieures des côtés d'habitacle peut présenter une longueur réduite.

De préférence également, les mâchoires de chacune des deux paires de mâchoires sont sollicitées par des ressorts de rappel pour se déplacer vers la première position.

Dans un mode de réalisation, chacun des ressorts de rappel est disposé entre une surface d'appui fixe et une surface d'appui mobile faisant partie d'un coulisseau mobile par rapport audit support fixe et comportant une rampe inclinée coopérant par glissement avec une rampe complémentaire d'une mâchoire pour pousser celle-ci vers l'autre mâchoire, lors du déplacement du coulisseau, sous l'effet du ressort de rappel et pour écarter les deux mâchoires lors du déplacement du coulisseau en sens inverse.

Le déplacement du coulisseau dans ledit sens inverse est commandé par pivotement de la poignée autour de son axe.

De préférence, les deux paires de mâchoires sont disposées symétriquement par rapport à un plan qui est situé entre les deux bords adjacents desdits panneaux arrière et avant, le coulisseau de l'une des deux paires de mâchoires étant réuni au coulisseau de l'autre paire de mâchoires.

Cette disposition permet de réduire la longueur de l'ensemble comprenant les deux paires de mâchoires, les coulisseaux et le support fixe de cet ensemble.

Selon une autre particularité avantageuse de l'invention, chaque élément de révolution comporte un évidement axial dans lequel est engagé de façon amovible, un doigt de centrage, solidaire du support fixe.

Cette disposition permet de centrer et guider les éléments de révolution portés par les panneaux par rapport aux mâchoires lors du montage et démontage de ces panneaux.

D'autres particularités et avantages de l'invention apparaîtront encore tout au long de la description ci-après.

Aux dessins annexés, donnés à titre d'exemples, non limitatifs :
- la figure 1 est une vue latérale partielle d'un véhicule automobile selon l'invention dont le toit est constitué de deux panneaux amovibles,
- la figure 2 est une vue en perspective montrant partiellement la partie supérieure d'un côté d'habitacle du véhicule selon l'invention, les deux panneaux amovibles et les organes de fixation de ceux-ci,
- la figure 3 est une vue latérale des organes de fixation des deux panneaux, ces derniers étant représentés en coupe longitudinale, les deux paires de mâchoires étant en position verrouillée,
- la figure 4 est une vue partielle analogue à la figure 3 montrant les deux paires de mâchoires en position déverrouillée.

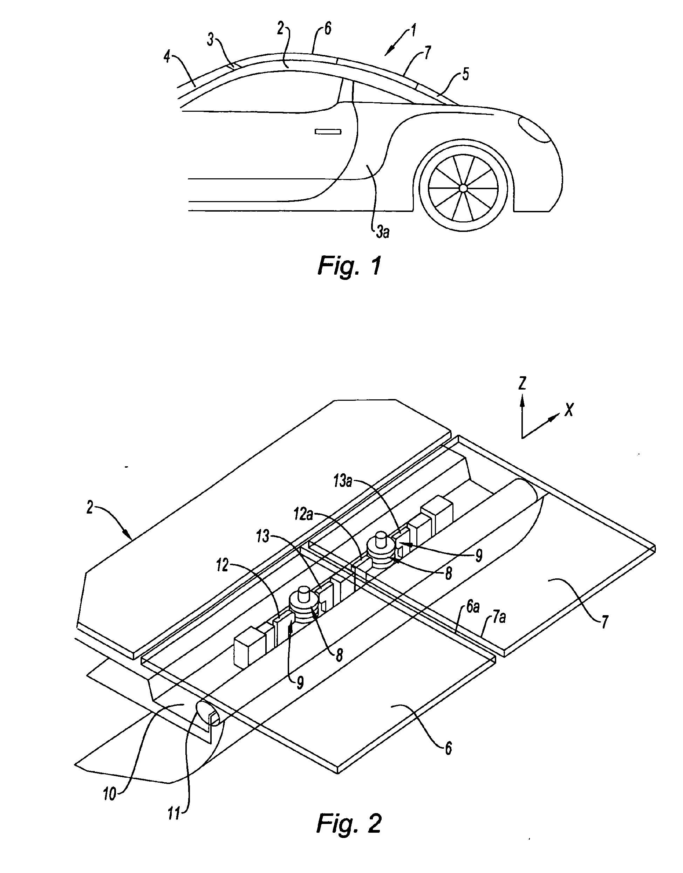

La figure 1 représente un véhicule automobile comprenant un toit escamotable 1 qui, en position de fermeture, est fixé de façon amovible dans une ouverture s'étendant entre les deux parties supérieures fixes 2 des deux côtés d'habitacle 3a et entre une partie avant fixe 3 adjacente au pare-brise 4 et une partie arrière fixe 5 adjacente à la lunette arrière.

Le toit escamotable 1 comprend un panneau avant rigide 6 et un panneau arrière rigide 7 qui, en position de fermeture s'étendent dans le prolongement l'un de l'autre et sont reliés respectivement à la partie avant fixe 3 et à la partie arrière fixe 5 grâce à des organes de centrage et aux deux parties supérieures fixes 2 du côté d'habitacle 3a grâce à des organes de verrouillage qui seront décrits en détail plus loin.

Lorsque les deux panneaux 6, 7 sont enlevés, on libère une ouverture s'étendant sur toute la largeur comprise entre les deux parties supérieures 2 du côté d'habitacle 3a en forme d'arc et toute la longueur comprise entre la partie fixe avant 3 et la partie fixe arrière 5.

Cette ouverture est située au-dessus des sièges avant et des sièges arrière.

Etant donné que les deux panneaux 6, 7 présentent une dimension réduite, ils peuvent être manipulés facilement par une seule personne et être rangés dans le coffre arrière ou bien être laissés au garage ou dans un endroit approprié du logement des utilisateurs.

On voit sur la figure 2 que chacun des panneaux 6, 7 comporte de chaque côté un organe 8 de fixation amovible coopérant avec un organe 9 de fixation complémentaire fixé sur une tôle 10 de la partie supérieure 2 en forme d'arc d'un côté d'habitacle.

En position fermée, les panneaux 6, 7 s'appuient sur un joint d'étanchéité 11 fixé longitudinalement sur la tôle 10.

Conformément à l'invention, les organes de fixation 8 et les organes de fixation complémentaires 9 comprennent chacun des moyens de guidage en translation suivant l'axe vertical Z du véhicule et des moyens de verrouillage suivant l'axe longitudinal X du véhicule.

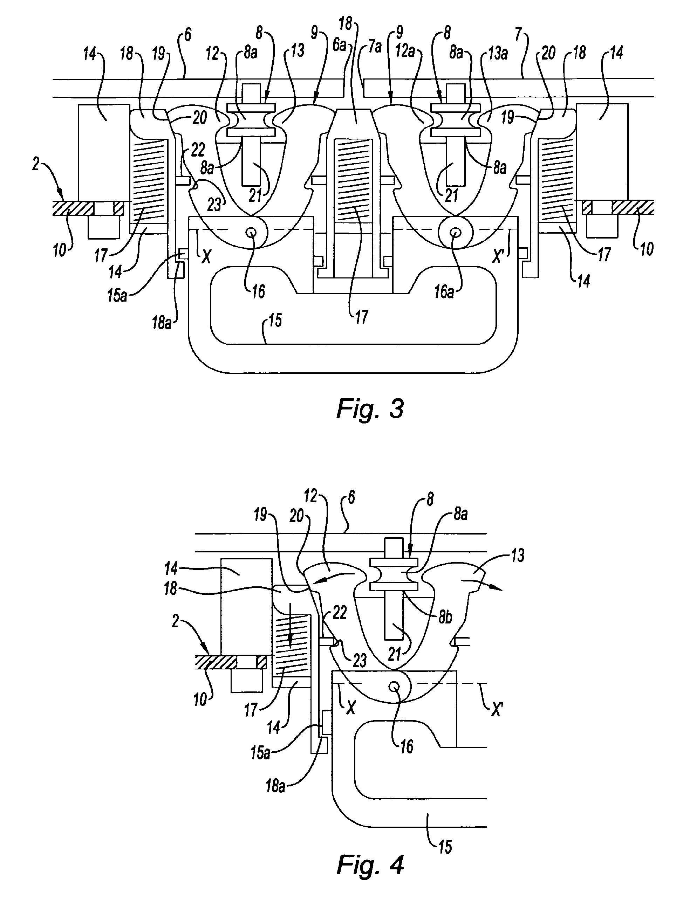

Ces moyens de guidage et de verrouillage sont représentés en détail sur les figures 3 et 4.

Comme montré sur les figures 3 et 4, les moyens de verrouillage 9 comportent deux paires de mâchoires 12, 13 et 12a, 13a solidaires d'un support commun 14 qui est fixé sur la tôle 10 de la partie supérieure 2 en forme d'arc du côté d'habitacle.

Les mâchoires 12, 13 et 12a, 13a sont mobiles, l'une vers l'autre, entre une première position (voir figure 3) dans laquelle chacune des paires de mâchoires 12, 13 ; 12a, 13a est verrouillée à l'organe de fixation 8 porté par l'un des deux panneaux et une seconde position (voir figure 4) dans laquelle ces paires de mâchoires 12, 13; 12a, 13a sont déverrouillées par rapport aux organes de fixation 8.

Le déplacement des mâchoires 12, 13; 12a, 13a vers la position déverrouillée est commandé par une poignée unique 15 faisant saillie sous la tôle 10 de façon à être accessible à l'intérieur de l'habitacle.

Les deux paires de mâchoires 12, 13 ; 12a, 13a sont situées dans un même plan sensiblement vertical et sont mobiles entre les première et seconde positions précitées par pivotement autour d'un axe 16, 16a perpendiculaire au plan sensiblement vertical.

Ces axes 16, 16a sont portés par le support 14 qui est fixé sur la tôle 10 du côté d'habitacle.

L'ensemble représenté sur les figures 3 et 4 présente un encombrement réduit en largeur et ne comporte aucun élément faisant saillie dans l'ouverture du toit ou dans l'habitacle à l'exception de la poignée 15.

Par ailleurs, la poignée 15 est montée pivotante suivant un axe X-X' perpendiculaire aux axes de pivotement 16, 16a des paires de mâchoires 12, 13 ; 12a, 13a.

Des organes de transmission qui seront précisés plus loin sont prévus entre la poignée et les deux paires de mâchoires 12, 13; 12a, 13a pour que le pivotement de la poignée 15 puisse commander le déplacement des deux paires de mâchoires 12, 13 ; 12a, 13a entre les positions verrouillée et déverrouillée.

Dans l'exemple représenté sur les figures 3 et 4, l'organe de fixation 8 porté par chacun des deux panneaux 6, 7 est constitué par un élément de révolution faisant saillie axialement sur la face interne du panneau 6, 7 et comportant une gorge annulaire 8a dans laquelle peut se verrouiller une paire de mâchoires 12, 13 ; 12a, 13a, comme montré sur la figure 3.

L'élément de révolution 8 est situé respectivement près du bord arrière 6a du panneau avant 6 et près du bord avant 7a du panneau arrière 7.

Cette disposition réduit la longueur de l'ensemble du mécanisme fixé sur la tôle 10.

Les mâchoires de chacune des deux paires de mâchoires 12, 13 ; 12a, 13a sont sollicitées par des ressorts de rappel 17 pour se déplacer vers la position de verrouillage.

Dans l'exemple représenté, chacun des ressorts de rappel 17 est disposé entre une surface d'appui fixe du support 14 et une surface d'appui mobile faisant partie d'un coulisseau 18 mobile dans une direction verticale par rapport au support 14.

Ce coulisseau 18 comporte une rampe inclinée 19 coopérant par glissement avec une rampe complémentaire 20 d'une mâchoire 12, 13; 12a, 13a pour pousser celle-ci vers l'autre mâchoire lors du déplacement du coulisseau 18 sous l'effet du ressort de rappel 17 et pour écarter les deux mâchoires 12, 13 ; 12a, 13a lors du déplacement du coulisseau 18 en sens inverse.

Le déplacement du coulisseau dans ce sens inverse, c'est-à-dire vers la position de déverrouillage est commandé par pivotement de la poignée 15 autour de son axe X-X', grâce à une came 15a coopérant avec une surface d'appui 18a du coulisseau 18.

Par ailleurs, le coulisseau 18 comporte un taquet 22 faisant saillie dans un évidement 23 des mâchoires pour déplacer celles-ci vers la position déverrouillée représentée sur la figure 4.

Comme montré par les figures 3 et 4, les deux paires de mâchoires 12, 13 ; 12a, 13a sont disposées symétriquement par rapport à un plan qui est situé entre les deux bords adjacents 6a, 7a des panneaux 6, 7.

A cet effet, le coulisseau 18 de l'une des deux paires de mâchoires 12, 13 est réuni au coulisseau de l'autre paire de mâchoires 12a, 13a pour former une seule pièce.

De plus, les figures 3 et 4 montrent que chaque élément de révolution 8 comporte un évidement axial 8b dans lequel est engagé de façon amovible, un doigt de centrage 21, solidaire du support fixe 14.

Ce doigt de centrage 21 et cet évidement axial 8b permettent de guider le positionnement des panneaux 6, 7, lors de leur mise en place sur le toit du véhicule.

Pour enlever les panneaux 6, 7 du toit, à partir de la position verrouillée représentée sur la figure 3, il suffit de faire pivoter la poignée 15 autour de l'axe X-X'.

Ce pivotement de la poignée 15 fait coulisser vers le bas le coulisseau 18 contre l'action des trois ressorts 17.

Lors de ce coulissement, les rampes inclinées 19 du coulisseau 18 se dégagent des rampes 20 des mâchoires 12, 13 ; 12a, 13a, ce qui libère celles-ci de la gorge annulaire 8a des éléments de révolution 8 portés par les panneaux 6, 7.

Les panneaux 6, 7 peuvent alors être enlevés du toit.

Pour remettre en place les panneaux 6, 7, on fait pivoter la poignée 15, comme indiqué plus haut pour mettre les mâchoires en position de déverrouillage, comme montré sur la figure 4, puis on engage les éléments de révolution 8 sur les doigts de centrage 21.

Il suffit ensuite de relâcher la poignée 15 pour que les ressorts 17 se détendent et poussent le coulisseau 18 vers le haut afin que les rampes 19 de celui-ci déplacent les mâchoires 12, 13 ; 12a, 13a vers la position de verrouillage.

## Revendications

1. Véhicule automobile comprenant un toit escamotable fixé de façon amovible dans une ouverture s'étendant entre les deux parties supérieures fixes (2) des côtés d'habitacle et entre une partie avant fixe (3) adjacente au pare-brise et une partie arrière fixe (5) adjacente à la lunette arrière, ce toit escamotable étant constitué par un panneau avant (6) et par un panneau arrière (7), chacun des panneaux comportant de chaque côté un organe de fixation amovible (8) coopérant avec un organe de fixation complémentaire (9) fixé sur la partie supérieure (2) d'un côté d'habitacle, **caractérisé en ce que** lesdits organes de fixation amovibles (8) et lesdits organes de fixation complémentaires (9) comprennent chacun des moyens de guidage en translation suivant l'axe vertical (Z) du véhicule et des moyens de verrouillage suivant l'axe longitudinal (X) du véhicule.

2. Véhicule automobile selon la revendication 1, **caractérisé en ce que** lesdits moyens de verrouillage comportent deux paires de mâchoires (12, 13 ; 12a, 13a) solidaires de la partie supérieure (2) du côté d'habitacle, mobiles l'une vers l'autre, grâce à une poignée unique (15), entre une première position dans laquelle chacune des paires de mâchoires est verrouillée à l'organe de fixation (8) porté par l'un des deux panneaux (6, 7) et une seconde position dans laquelle ces paires de mâchoires (12, 13 ; 12a, 13a) sont déverrouillées par rapport aux organes de fixation (8), ladite poignée étant située à l'intérieur de l'habitacle.

3. Véhicule automobile selon la revendication 2, **caractérisé en ce que** les deux paires de mâchoires (12, 13 ; 12a, 13a) sont situées dans un même plan sensiblement vertical et sont mobiles entre lesdites première et seconde positions par pivotement autour d'un axe (16, 16a) perpendiculaire audit plan sensiblement vertical, cet axe (16, 16a) étant porté par un support fixe (14).

4. Véhicule automobile selon la revendication 3, **caractérisé en ce que** la poignée (15) est montée pivotante suivant un axe (X-X') perpendiculaire aux axes de pivotement (16, 16a) des paires de mâchoires (12, 13 ; 12a, 13a), des organes de transmission étant prévus entre la poignée (15) et les deux paires de mâchoires (12, 13 ; 12a, 13a) pour que le pivotement de la poignée (15) puisse commander le déplacement des deux paires de mâchoires (12, 13 ; 12a, 13a) entre lesdites première et seconde positions.

5. Véhicule automobile selon l'une des revendications 3 ou 4, **caractérisé en ce que** l'organe de fixation (8) porté par chacun des deux panneaux (6, 7) est constitué par un élément de révolution faisant saillie axialement sur la face interne du panneau (6, 7) et comportant une gorge annulaire (8a) dans laquelle peut se verrouiller une paire de mâchoires (12, 13 ; 12a, 13a) dans ladite première position.

6. Véhicule automobile selon la revendication 5, **caractérisé en ce que** ledit élément de révolution (8) est situé respectivement près du bord arrière (6a) du panneau avant (6) et près du bord avant (7a) du panneau arrière (7).

7. Véhicule automobile selon l'une des revendications 3 à 5, **caractérisé en ce que** les mâchoires de chacune des deux paires de mâchoires (12, 13 ; 12a, 13a) sont sollicitées par des ressorts de rappel (17) pour se déplacer vers la première position.

8. Véhicule automobile selon la revendication 7, **caractérisé en ce que** chacun des ressorts de rappel (17) est disposé entre une surface d'appui fixe et une surface d'appui mobile faisant partie d'un coulisseau (18) mobile par rapport audit support fixe (14) et comportant une rampe inclinée (19) coopérant par glissement avec une rampe complémentaire (20) d'une mâchoire pour pousser celle-ci vers l'autre mâchoire, lors du déplacement du coulisseau (18), sous l'effet du ressort de rappel (17) et pour écarter les deux mâchoires (12, 13 ; 12a, 13a) lors du déplacement du coulisseau (18) en sens inverse.

9. Véhicule automobile selon la revendication 8 dans son rattachement à la revendication 4, **caractérisé en ce que** le déplacement du coulisseau dans ledit sens inverse est commandé par pivotement de la poignée (15) autour de son axe (X-X').

10. Véhicule automobile selon l'une des revendications 8 ou 9, **caractérisé en ce que** les deux paires de mâchoires (12, 13 ; 12a, 13a) sont disposées symétriquement par rapport à un plan qui est situé entre les deux bords adjacents (6a, 7a) desdits panneaux arrière et avant, le coulisseau (18) de l'une des deux paires de mâchoires (12, 13 ; 12a, 13a) étant réuni au coulisseau de l'autre paire de mâchoires.

11. Véhicule automobile selon la revendication 5 et l'une des revendications 8 à 10, **caractérisé en ce que** chaque élément de révolution (8) comporte un évidement axial (8b) dans lequel est engagé de façon amovible, un doigt de centrage (21), solidaire du support fixe (14).

## Claims

1. A motor vehicle comprising a retractable roof fixed in a removable manner in an opening extending between the two fixed upper parts (2) of the sides of the passenger compartment and between a front fixed part (3) adjacent to the windscreen and a fixed rear part (5) adjacent to the rear window, this retractable roof being constituted by a front panel (6) and by a rear panel (7), each of the panels comprising on each side a removable fixing member (8) cooperating with a complementary fixing member (9) fixed on the upper part (2) of a side of the passenger compartment, **characterized in that** the said removable fixing members (8) and the said complementary fixing members (9) each include means for guiding in translation along the vertical axis (Z) of the vehicle and means for locking along the longitudinal axis (X) of the vehicle.

2. The motor vehicle according to Claim 1, **characterized in that** the said locking means comprise two pairs of jaws (12, 13; 12a, 13a) integral with the upper part (2) of side of the passenger compartment, movable one towards the other, owing to a single handle (15), between a first position in which each of the pairs of jaws is locked to the fixing member (8) carried by one of the two panels (6, 7) and a second position in which these pairs of jaws (12, 13; 12a, 13a) are unlocked with respect to the fixing members (8), the said handle being situated in the interior of the passenger compartment.

3. The motor vehicle according to Claim 2, **characterized in that** the two pairs of jaws (12, 13; 12a, 13a) are situated in the same substantially vertical plane and are movable between the said first and second positions by pivoting about an axis (16, 16a) perpendicular to the said substantially vertical plane, this axis (16, 16a) being carried by a fixed support (14).

4. The motor vehicle according to Claim 3, **characterized in that** the handle (15) is pivotably mounted along an axis (X-X') perpendicular to the pivoting axes (16, 16a) of the pairs of jaws (12, 13; 12a, 13a), transmission members being provided between the handle (15) and the two pairs of jaws (12, 13; 12a, 13a) so that the pivoting of the handle (15) can control the displacement of the two pairs of jaws (12, 13; 12a, 13a) between the said first and second positions.

5. The motor vehicle according to one of Claims 3 or 4, **characterized in that** the fixing member (8) carried by each of the two panels (6, 7) is constituted by a revolution element projecting axially on the internal face of the panel (6, 7) and comprising an annular groove (8a) in which a pair of jaws (12, 13; 12a, 13a) can become locked in the said first position.

6. The motor vehicle according to Claim 5, **characterized in that** the said revolution element (8) is situated respectively close to the rear edge (6a) of the front panel (6) and close to the front edge (7a) of the rear panel (7).

7. The motor vehicle according to one of Claims 3 to 5, **characterized in that** the jaws of each of the two pairs of jaws (12, 13; 12a, 13a) are activated by return springs (17) to move towards the first position.

8. The motor vehicle according to Claim 7, **characterized in that** each of the return springs (17) is arranged between a fixed support surface and a mobile support surface forming part of a slide (18) which is movable with respect to the said fixed support (14) and comprising an inclined ramp (19) cooperating by sliding with a complementary ramp (20) of a jaw to push the latter towards the other jaw, on the displacement of the slide (18), under the effect of the return spring (17) and to spread apart the two jaws (12, 13; 12a, 13a) on the displacement of the slide (18) in the opposite direction.

9. The motor vehicle according to Claim 8 in its connection to Claim 4, **characterized in that** the displacement of the slide in the said opposite direction is controlled by pivoting of the handle (15) about its axis (X-X').

10. The motor vehicle according to one of Claims 8 or 9, **characterized in that** the two pairs of jaws (12, 13; 12a, 13a) are arranged symmetrically with respect to a plane which is situated between the two adjacent edges (6a, 7a) of the said rear and front panels, the slide (18) of one of the two pairs of jaws (12, 13; 12a, 13a) being connected to the slide of the other pair of jaws.

11. The motor vehicle according to Claim 5 and one of Claims 8 to 10, **characterized in that** each revolution element (8) comprises an axial aperture (8b) in which a centring finger (21), integral with the fixed support (14), is engaged in a removable manner.

## Patentansprüche

1. Kraftfahrzeug, das ein versenkbares Dach aufweist, das abnehmbar unter einer Abdeckung befestigt ist, die sich zwischen den zwei oberen stationären Teilen (2) der Seiten der Fahrgastzelle und zwischen einem stationären vorderen Teil (3) neben der Windschutzscheibe und einem stationären hinteren Teil (5) neben dem Heckfenster erstreckt, wobei dieses versenkbare Dach aus einer vorderen Platte (6) und einer hinteren Platte (7) besteht, wobei jede der Platten auf jeder Seite ein abnehmbares Befestigungselement (8) aufweist, das mit einem komplementären Befestigungselement (9), das auf dem oberen Teil (2) einer Fahrgastzellenseite befestigt ist, zusammenwirkt, **dadurch gekennzeichnet, dass** die abnehmbaren Befestigungselemente (8) und die komplementären Befestigungselemente (9) jeweils Mittel zum Führen in Verschiebung entlang der vertikalen Achse (Z) des Fahrzeugs und Mittel zum Verriegeln entlang der Längsachse (X) des Fahrzeugs aufweisen.

2. Kraftfahrzeug nach Anspruch 1, **dadurch gekennzeichnet, dass** die Verriegelungsmittel zwei Paare Backen (12, 13; 12a, 13a) aufweisen, die fest mit dem oberen Teil (2) der Fahrgastzellenseite verbunden sind, die zueinander dank einem einzigen Griff (15) zwischen einer ersten Position, in der jedes der Paare Backen an dem Befestigungselement (8), das von einer der Platten (6, 7) getragen wird, verriegelt ist, und einer zweiten Position, in der diese Paare Backen (12, 13; 12a, 13a) in Bezug zu dem Befestigungselement (8) entriegelt sind, beweglich sind, wobei sich der Griff im Inneren der Fahrgastzelle befindet.

3. Kraftfahrzeug nach Anspruch 2, **dadurch gekennzeichnet, dass** die zwei Paare Backen (12, 13; 12a, 13a) in einer gleichen Ebene im Wesentlichen vertikal liegen und zwischen einander zwischen der ersten und der zweiten Position durch Schwenken um eine Achse (16, 16a) senkrecht zu der im Wesentlichen vertikalen Ebene beweglich sind, wobei diese Achse (16, 16a) von einem stationären Träger (14) getragen wird.

4. Kraftfahrzeug nach Anspruch 3, **dadurch gekennzeichnet, dass** der Griff (15) entlang einer Achse (X-X') senkrecht zu den Schwenkachsen (16, 16a) der Paare Backen (12, 13; 12a, 13a) montiert ist, wobei Übertragungselemente auf dem Griff (15) und den zwei Paaren Backen (12, 13; 12a, 13a) vorgesehen sind, damit das Schwenken des Griffs (15) das Verlagern der zwei Paare Backen (12, 13; 12a, 13a) zwischen der ersten und der zweiten Position steuern kann.

5. Kraftfahrzeug nach einem der Ansprüche 3 oder 4, **dadurch gekennzeichnet, dass** das Befestigungselement (8), das von jeder der zwei Platten (6, 7) getragen wird, aus einem Rotationselement besteht, das axial auf der Innenseite der Platte (6, 7) vorsteht und eine ringförmige Hohlkehle (8a) aufweist, in der sich ein Paar Backen (12, 13; 12a, 13a) in der ersten Position verriegeln kann.

6. Kraftfahrzeug nach Anspruch 5, **dadurch gekennzeichnet, dass** das Rotationselement (8) jeweils in der Nähe des hinteren Rands (6a) der vorderen Platte (6) und in der Nähe des vorderen Rands (7a) der hinteren Platte (7) liegt.

7. Kraftfahrzeug nach einem der Ansprüche 3 bis 5, **dadurch gekennzeichnet, dass** die Backen jedes der zwei Paare Backen (12, 13; 12a, 13a) von Rückholfedern (17) beansprucht werden, um sich zu der ersten Position zu bewegen.

8. Kraftfahrzeug nach Anspruch 7, **dadurch gekennzeichnet, dass** jede der Rückholfedern (17) zwischen einer stationären Auflagefläche und einer beweglichen Auflagefläche angeordnet ist, die Teil einer Gleitführung (18) ist, die in Bezug zu dem stationären Träger (14) beweglich ist und eine schiefe Ebene (19) aufweist, die durch Gleiten mit einer komplementären Rampe (20) einer Backe zusammenwirkt, um diese zu der anderen Backe zu schieben, bei der Bewegung der Gleitführung (18) unter der Einwirkung der Rückholfeder (17), und um die zwei Backen (12, 13; 12a, 13a) bei der Bewegung der Gleitführung (18) in die umgekehrte Richtung zu beabstanden.

9. Kraftfahrzeug nach Anspruch 8, in seiner Verbindung mit Anspruch 4, **dadurch gekennzeichnet, dass** die Bewegung der Gleitführung in die umgekehrte Richtung durch Schwenken des Griffs (15) um seine Achse (X-X' ) gesteuert ist.

10. Kraftfahrzeug nach einem der Ansprüche 8 oder 9, **dadurch gekennzeichnet, dass** die zwei Paare Backen (12, 13; 12a, 13a) symmetrisch in Bezug zu einer Ebene angelegt sind, die zwischen den zwei nebeneinanderliegenden Rändern (6a, 7a) der hinteren und der vorderen Metallplatte liegen, wobei die Gleitführung (18) eines der zwei Paare Backen (12, 13; 12a, 13a) mit der Gleitführung des anderen Paares Backen vereint ist.

11. Kraftfahrzeug nach Anspruch 5 und einem der Ansprüche 8 bis 10, **dadurch gekennzeichnet, dass** jedes Rotationselement (8) eine axiale Aussparung (8b) aufweist, in die auf abnehmbare Art ein Zentrierfinger (21), der fest mit dem stationären Träger (14) verbunden ist, eingefügt ist.
